**Europäisches Patentamt**

**European Patent Office**

**Office européen des brevets**

(11) Veröffentlichungsnummer: **0 139 779**
**A1**

## (12) EUROPÄISCHE PATENTANMELDUNG

(21) Anmeldenummer: **83110772.7**

(22) Anmeldetag: **27.10.83**

(51) Int. Cl.⁴: **G 09 B 5/06**
**G 03 B 23/14**

(43) Veröffentlichungstag der Anmeldung:
**08.05.85 Patentblatt 85/19**

(84) Benannte Vertragsstaaten:
**AT BE CH DE FR GB IT LI LU NL SE**

(71) Anmelder: **Licinvest AG**
**Hartbertstrasse 9**
**CH-7002 Chur(CH)**

(72) Erfinder: **Ackeret, Peter**
**Allmendstrasse 18**
**CH-8700 Küsnacht(CH)**

(74) Vertreter: **Dipl.-Ing. H. Marsch Dipl.-Ing. K. Sparing**
**Dipl.-Phys.Dr. W.H. Röhl Patentanwälte**
**Rethelstrasse 123**
**D-4000 Düsseldorf(DE)**

(54) **Bildbetrachtungs- und Tonaufnahme- und/oder Wiedergabeanordnung.**

(57) Die Anordnung umfaßt einerseits ein Bildbetrachtungsgerät in Form eines Bildwechselers, mittels dem aus einem Stapel von Bildern jeweils eines sichtbar präsentiert wird, wonach zyklisch ein Austausch erfolgen kann, und andererseits eine Vorrichtung, mittels der ein auf den Bildern angebrachter Tonträger – etwa ein Magnetband – besprochen oder abgefragt werden kann, wobei die Kopplung zwischen Bildwechsler und Audio-Vorrichtung so vorgenommen ist, daß immer die dem gerade präsentierten Bild zugeordnete Tonspur akzessibel ist; dabei ist gegebenenfalls ein Teil der Audio-Vorrichtung, inbesondere ein Spurabtastkopf, in dem Bildwechsler selbst untergebracht.

Fig.1

EP 0 139 779 A1

0139779

49/50-E

Bildbetrachtungs- und Tonaufnahme- und/oder
Wiedergabeanordnung
————————————————————————————————————————————

Die Erfindung betrifft eine Bildbetrachtungs- und
Tonaufnahme- und/oder Wiedergabeanordnung für Informationsträgerkarten, auf deren Fläche die Bildinformation und die zugehörige
Toninformation bzw. ein Speicher für diese untergebracht sind.

Es sind Geräte marktgängig, mittels denen die auf ein
Bild - z.B. eine Fotografie - aufgebrachter Magnetstreifen oder
allgemein ein Tonträger vertont werden und, während das Bild betrachtet werden kann, die Toninformation wieder abgerufen werden
kann. Im Prinzip unterscheiden sich diese bekannten Geräte nur
dadurch von konventionellen Tonbandgeräten, daß anstelle des Tonbandes allein eine die Bildinformation aufweisende Karte, auf die
das Tonband aufgeklebt ist, an einem Aufzeichnungs- und Wiedergabekopf vorbeitransportiert wird. Alternativ kann auch die Bildinformation mit dem Tonband feststehen, und der Tonkopf läuft längs
des Tonbandes; der Informationsträger wird dann in einem solchen,
hauptsächlich als Lehrgerät verwendeten Apparat eingespannt.

Diesen bekannten Anordnungen haftet der Nachteil an, daß
jede Informationsträgerkarte für sich gehandhabt werden muß, d.h.
in ein Tonaufzeichnungs- und Wiedergabegerät eingesetzt und wieder
entnommen werden muß. Dies ist nicht nur umständlich, sondern bringt
auch die Gefahr mit sich, daß die Informationsträgerkarten beschädigt werden, verschmutzen oder zerkratzt werden, und daß die

- 1 -

Reihenfolge von nacheinander zu präsentierenden Karten durcheinandergebracht wird, was für ein Lehrprogramm oder dergleichen
natürlich unzulässig ist.

Aufgabe der Erfindung ist es, eine Anordnung mit den im
Oberbegriff des Patentanspruchs 1 genannten Merkmalen zu schaffen,
bei der die Handhabung auch bei einer Vielzahl von Karten einfach
und narrensicher ist, eine Beschädigung oder Verschmutzung der Karten zumindest weitgehend ausgeschlossen wird und eine einmal festgelegte Reihenfolge für eine größere Zahl von Karten auch beim Betrachtungs- und Tonwiedergabevorgang mit Sicherheit beibehalten wird.

Die Lösung dieser Aufgabe ist erfindungsgemäß durch die im
kennzeichnenden Teil des Patentanspruchs 1 angegebenen Merkmale
gegeben.

Im Prinzip besteht die Anordnung gemäß der Erfindung demgemäß aus zwei Teilen, nämlich einem zunächst einmal geschlossenen
Magazin, in dem eine größere Anzahl von Bildern untergebracht ist,
von denen jeweils das oberste der als Stapel gespeicherten Bilder
sichtbar präsentiert wird. Ein solches Magazin schützt alle Bilder
oder, allgemein, alle im Magazin untergebrachten Informationsträgerkarten gegen Verschmutzen und Beschädigen. Um ein präsentiertes Bild
gegen ein anderes auszuwechseln, bedarf es keines Eingriffs am Bild
von Hand: Mittels Betätigung des Wechselschiebers von Hand oder maschinell wird der Bildwechsel vollzogen. Das Prinzip derartiger Magazine ist bekannt. Weisen die Bilder jedoch noch eine Tonspur auf, so
steht der eigentlich erwünschte Schutz durch die Magazinwandungen dem
notwendigen Zugriff zur Toninformation im Wege. Deshalb wird erfindungsgemäß das Magazin selbst an ein Tonaufzeichnungs- und Wiedergabegerät in der Weise angekuppelt, daß bei Aufrechterhaltung des Schutzes
und ohne daß ein Benutzer die Reihenfolge der Präsentation verändern
kann, der Zugriff zur Tonspur gerade des obersten auf dem Stapel befindlichen Bildes möglich wird, wobei Teile des Geräts, z.B. ein Tonkopf, bereits im Magazin selbst eingebaut sein können. Auf diese Weise wird die Vertonung bzw. das Abspielen der Tonaufzeichnung des gleichzeitig zur Betrachtung präsentierten Bildes sichergestellt. Nach Betätigen des Wechselschiebers wird das nächste Bild präsentiert, und
die auf ihm angebrachte Tonspur kann vertont bzw. abgehört werden, und zwar, ohne daß der Benutzer mehr tun muß, als den Wechselschieber für den Bildwechsel zu betätigen und Aufzeichnung bzw. Wiedergabe auszulösen.

Bei den Informationsträgern, für die die erfindungsgemäß ausgebildete Anordnung bestimmt und geeignet ist, kann es sich um vorkonfektionierte Ware handeln, d.h. solche Informationsträgerkarten, bei denen die Bildinformation und Toninformation von irgendeinem Hersteller bereits auf der Karte vereinigt worden sind. Dies gilt z.B. für Lehrprogramme, Werbeinformationen, Gebrauchs- und Serviceanweisungen, oder Unterhaltung, wie z.B. vertonte Bilderbücher oder ähnliches.

Ebenso ist die Anordnung aber auch geeignet für Amateure, die Bildinformationen, vor allen Dingen Fotografien, nachträglich vertonen wollen, oder mit einer fertigen Tonaufnahme kombinieren wollen. Schließlich besteht auch die Möglichkeit, die Bildaufzeichnung und die Tonaufzeichnung simultan oder quasi simultan mittels einer hierfür besonders ausgebildeten Kamera vorzunehmen, wobei die Zusammengehörigkeit von Bild- und Tonaufzeichnung durch den folgenden Entwicklungs- und Kopiervorgang aufrechterhalten bleibt, so daß dem Benutzer bereits die mit der Tonaufzeichnung versehenen Positiv-Kopien in die Hand gegeben werden.

Die Anordnung gemäß der Erfindung ist an kein bestimmtes Bild- oder Tonaufzeichnungsverfahren gebunden. Neben fotografischen können natürlich auch gedruckte Bildinformationen auf den Karten vorhanden sein, und neben der weit verbreiteten Magnet-Ton-Aufzeichnung kann man auch mit einer Licht-Ton-Aufzeichnung oder anderen Speichersystemen arbeiten.

Es wird davon ausgegangen, daß die Informationsträgerkarte sowohl die Ton-, als auch die Bildinformation aufweist, damit die Zuordnung beider ständig gewährleistet ist. Die Anordnung gemäß der Erfindung wird dann besonders einfach, wenn für die Toninformation bei jeder Karte dieselbe Stelle verwendet wird. Bei Anordnung des Tonträgers auf der Bildseite darf natürlich das Bild nicht verdeckt werden. Man also z.B. die gesamte Bildfläche mit einem durchsichtigen Tonträger versehen. Die zweite Möglichkeit ist die Anbringung

- 3 -

des Tonträgers nach Art eines Rahmens, rings um die Bildinformation herum. Schließlich kann man auch nur einen Tonstreifen längs einer Kante außerhalb des eigentlichen Bildfeldes vorsehen; das bedingt dann aber, daß die Informationsträgerkarten immer gleich orientiert in dem Magazin eingeordnet sind. Wenn das Aufzeichnungs- und Wiedergabegerät für das Zusammenwirken mit Kassetten unterschielichen Format ausgebildet ist, empfiehlt es sich dann, Tonträger von gleicher Länge auch auf Karten unterschiedlicher Größe gleich orientiert anzuordnen, um den Aufbau des Aufnahme- und Wiedergabegerätes einfach zu halten.

Ferner kann das Kartenmaterial, auf das ein Bildträger aufgebracht ist, selbst als Tonträger ausgebildet sein oder ein Tonträger kann in dieses Material eingelassen sein, so daß er von der Bildseite aus abgetastet werden kann, ohne daß die Bildinformation dadurch verkleinert oder verdeckt wird.

Schließlich kann der Tonträger auch auf der Rückseite der Karte angeordnet sein. Die Karte kann vollständig mit einem Tonträger beschichtet sein, oder analog zum Vorhergesagten kann der Tonträger nur an einzelnen Stellen der Rückseite aufgetragen sein, was wieder voraussetzt, daß die Karten gleichsinnig orientiert im Magazin liegen. Die letztgenannte Bedingung läßt sich umgehen, wenn beispielsweise der Tonträger in Form eines Kreuzes auf der Rückseite der Karte angeordnet wird, wenn diese quadratisch ist, oder in Form eines Streifens in der Mittelachse eines rechteckigen Bildes, so daß der Streifen unabhängig von der Orientierung der Karte im Magazin abgetastet werden kann.

Bringt man den Tonträger auf der Bildrückseite an, so braucht bei gegebenen Abmessungen der Bildinformation die Karte nur das Format dieser Bildinformation zu haben. Das gestattet z.B. das Nachvertonen von Bildern, bei denen bisher eine Vertonung nicht vorgesehen war.

Das Anbringen eines Tonträgers auf einem Bildträger kann in verschiedener Weise vor sich gehen. Der Benutzer kann selbst einen Tonträger auf einem vorliegenden Bild aufbringen, doch ist es bevorzugt, daß dem Benutzer bereits Informationsträger mit Bild-

- 4 -

information und zumindest vorbereiteten, wenn auch noch nicht vertontem Tonträger zur Verfügung gestellt werden.Ein Amateurfotograf kann beispielsweise simultan oder quasi simultan Bild und Ton aufnehmen und die Verarbeitung der "Negative" bis zu einem fertigen Informationsträger mit Bild- und Tonaufzeichnung wird der Kopieranstalt überlassen. Es besteht auch die Möglichkeit, insbesondere bei Sofortbildkameras, während der Aufnahme oder unmittelbar danach einen simultan oder quasi simultan vertonten Tonträger mit dem sofort fertigen Bild zu verbinden.

Ein Stapel von so vorbereiteten Karten, bei denen gegebenenfalls der Tonträger bereits vertont ist, wird nun in das Magazin eingelegt. Die Tonträger sind dabei bezüglich der Karten nach einem der oben erläuterten Systeme angebracht, und gegebenenfalls, soweit nach obigem notwendig, orientiert.

Mittels des Wechselschiebers wird nun eine Bildinformation nach der anderen dem Betrachter präsentiert. Zusammen mit der Bildinformation gelangt auch immer die mit ihm verbundene Tonaufzeichnung an die oberste Position des Stapels.

Je nachdem, welches der oben genannten System für die Anordnung des Tonträgers auf, in oder unter der Karte verwendet wird, muß auch das Aufzeichnungs- und Wiedergabegerät für die Vertonung ausgebildet werden.

Für das Gerät bieten sich die folgenden Möglichkeiten an:

Das gesamte Tonaufzeichnungs- und Wiedergabegerät kann im Magazin selbst untergebracht werden, einschließlich dem akustischen Wandler, eventuell notwendigen Energiequellen und eventuell vorgesehenen elektronischen Schaltkreisen. Eine solche Anordnung läßt sich mit heute verfügbaren Komponenten klein, leicht und kompakt bauen und ist damit besonders geeignet für ortsunabhängige Benutzung.

Verfügt der Benutzer über eine größere Anzahl von Informationsträgerkarten, die in mehreren Magazinen untergebracht sind, empfiehlt es sich aus wirtschaftlichen Gründen, das Aufzeichnungs- und Wiedergabegerät für die Vertonung nur einmal für alle Magazine vorzusehen. Die Magazine sind dann so ausgebildet, daß die Abtastung der auf oder an den Karten befindlichen Tonträger von in dem Aufzeichnungs- und Wiedergabegerät vorgesehenen Komponenten aus erfolgen kann.

Zwischen der erstgenannten und der zweitgenannten Ausführungsform sind Zwischenformen möglich, bei denen ein Teil der Abtastkomponenten, z.B. ein Tonkopf, noch im Magazin vorgesehen ist, während die folgenden Komponenten, z.B. elektronische Schaltkreise und Wandler, in dem mit den Magazinen zu kuppelnden Gerät untergebracht sind. Auch bei den beiden zuletzt beschriebenen Ausführungsformen kann man mit heute erhältlichen Komponenten handliche, kompakte und ästhetisch ansprechende Anordnungen schaffen.

Es ist aber auch möglich, insbesondere für die Wiedergabe von Bild- und Toninformationen für ein größeres Publikum, unmittelbar aus den Magazinen heraus die Bildinformation zu projizieren und die Toninformation abzuspielen, wofür das Tonwiedergabegerät zugleich als Projektionsapparat für die Bildinformation ausgebildet wird.

Wenn ein Teil oder alle Aufzeichnungs- und Wiedergabekomponenten für die Toninformation in einem mit dem Magazin kuppelbaren Gerät untergebracht sind, weist das Magazin vorteilhafterweise eine Öffnung auf, durch die der Zugang zur Tonspur erfolgt für Aufzeichnung oder Wiedergabe. Aus Gründen der Aufrechterhaltung des Staubschutzes und auch aus ästhetischen Gründen wird eine solche Öffnung, wenn das Magazin von dem Gerät entkuppelt wird, wieder verschlossen.

Die folgenden Erläuterungen beziehen sich vor allem auf die Magnet-Ton-Aufzeichnung, und die dort gebräuchlichen Ausdrücke werden verwendet, doch es versteht sich, daß die analogen Betrachtungen auch für andere Aufzeichnungs- und Wiedergabeverfahren in jeweils analoger Weise gelten, beispielsweise für Licht-Ton-Aufzeichnungen.

Beim Magnet-Ton-Verfahren ist für Aufzeichnung und Wiedergabe eine Relativbewegung zwischen dem Tonträger und dem Tonkopf erforderlich, wobei der Tonkopf mit einer gewissen Kraft an der Magnetspur anliegen soll. Dieses Anliegen während des Aufzeichnungs- oder Wiedergabevorgangs soll aber vorteilhafterweise dann unterbrochen werden, wenn ein Wechsel der Karte durch Betätigen des Wechselschiebers erfolgt. Befindet sich die Magnetspur an der Unterseite der Karte, so wird zweckmäßig der Tonkopf mittels einer zusätzlichen Feder angedrückt; befindet sich dagegen die Magnetspur auf der Kartenoberseite, so kann der Tonkopf starr abgestützt sein, da unter dem Stapel eine, den gesamten Stapel und damit auch das oberste Bild gegen das Betrachtungsfenster der Kassette drückende Federanordnung vorgesehen sein wird.

Da die Informationsträgerkarten in dem Magazin stationär präsentiert werden, muß der Tonkopf eine gleichförmige Bewegung längs der stillstehenden Magnetspur durchlaufen, um Aufnahme und Wiedergabe zu bewirken. Nach jedem Abtastvorgang einer Magnetspur muß der Tonkopf wieder in seine Ausgangsstellung zurückgeführt werden, von der aus er dieselbe Tonspur nochmals oder die Tonspur der nächsten durch Betätigung des Wechselschiebers präsentierten Karte ablesen kann. Die gleichförmige Abtastbewegung des Tonkopfes und seine Rückführung in die Ausgangsposition können in konventioneller Weise mittels eines in dem Aufzeichnungs- und Wiedergabegerät vorgesehenen Elektromotors bewirkt werden. Wenn für das Aufzeichnungs- und Wiedergabegerät größere Abmessungen zulässig sind, beispielsweise bei Kombination mit einer Bildprojektionsoptik, kann man auch einen motorischen Antrieb für den Wechselschieber vorsehen, der durch Tastendruck betätigbar ist. Eine besonders preisgünstige und ebenfalls sehr kompakt herstellbare Ausführungsform ergibt sich, wenn durch die Wechselbewegung des Wechselschiebers ein mechanischer Energiespeicher, z.B. eine Feder, aufgeladen wird, der dann die Antriebsenergie für die gleichförmige Abtastbewegung des Tonkopfes, gegebenenfalls auch für seine Rückstellung in die Ausgangsposition, aufbringen kann. Aus anderen Gebieten der Technik sind Hemmwerke bekannt, mittels denen die Energieabgabe eines solchen Energiespeichers gleichmäßig genug für eine heutigen Qualitätsanforderungen genügende Gleichförmigkeit möglich ist. Die bei der Wechselbewegung aufbringbare und in dem mechanischen Speicher speicherbare Energie wird für zahlreiche Abtast- und Rückstellvorgänge des Tonkopfes ausreichen. Andernfalls kann man durch Betätigung des Wechselschiebers den Energiespeicher nachladen, wobei jedoch die Wechselbewegung nicht vollständig durchgeführt wird, und damit auch kein Wechsel der Karte erfolgt. Sowohl bei einem motorischen Tonkopfantrieb, als auch bei Antrieb des Tonkopfes von einem mechanischen Energiespeicher her, kann man unterschiedliche Abtastgeschwindigkeiten vorsehen, um die Aufzeichnungs- und Wiedergabedauer bei gegebener Länge des Magnetbandes zu verändern, und man kann im Magazin oder im Aufzeichnungs- und Wiedergabegerät eine Anzeige für die jeweils noch zur Verfügung stehende Speicherkapazität der Tonaufzeichnung vorsehen. Wenn ein mechanischer Energiespeicher durch die Wechselschieberbetätigung aufgezogen wird, und das Aufzeichnungs- und Wiedergabegerät den zu bewegenden Tonkopf enthält, wird durch das Kuppeln von Magazin und Gerät auch eine Kupplung für die mechanische Energieübertragung bewirkt.

Anstatt den Tonkopf ohne Abtastung in die Ausgangsposition zurückzuführen, kann man auch eine Anordnung wählen, bei der sowohl auf der Hinbewegung als auch auf der Rückbewegung eine Abtastung erfolgt, wobei die beiden Spuren nebeneinander liegen können.

Wenn die Magnetspur auf der Unterseite der Karten angeordnet ist, kann man auch während der Betrachtung des oben liegenden Bildes die Tonspur des im Stapel untersten Bildes abtasten und speichern, und den Speicherinhalt erst nach der nächsten Wechselbewegung, durch welche die unterste Karte in die Betrachtungsposition auf dem Stapel befördert wird, auslesen.

Konstruktiv ist dafür zu sorgen, daß nicht nur die Ausfluchtung des Tonkopfes mit der jeweiligen Tonspur durch den Kupp- lungsvorgang von Magazin und Gerät sichergestellt sein muß, wobei vorteilhafterweise einrastende Verriegelungen oder dergl. vorgesehen werden, sondern man muß auch dafür sorgen, daß das Magazin einerseits, aber auch das Gerät selbst andererseits so ausgebildet sein müssen, daß auch bei mit dem Gerät gekuppelten Magazinen die ganze Anordnung funktionsfähig ist, auch für den Bildwechsel, d.h. daß der Wechselschieber frei beweglich bleibt und auch erfaßt werden kann. Wird mit der Wechselbewegung des Schiebers ein mecha- nischwer Energiespeicher aufgeladen, so wird entsprechend die Lebensdauer von für die elektronische Verstärkung benötigten Batterien verlängert, weil diese nicht mehr die Energie für die Tonkopfbewegung zu liefern brauchen.

Wenn - wie üblich - eine magnetisch aufgezeichnete Toninformation auch magnetisch gelöscht werden soll, kann man dies unter Ausnutzung der Wechselschieberbewegung dadurch tun, daß einfach ein Löschmagnet von Hand oder durch andere Steuermittel betätigt an die Tonspur angedrückt wird, so daß der Löschvorgang während der Wechselbewegung vorgenommen wird, da für das Löschen keine gleichbleibende Relativgeschwindigkeit notwendig ist. Das Magazin kann dann auch mit einer im allgemeinen erwünschten Löschsperre ausgestattet werden, derart, daß dann für alle in dem betreffenden Magazin untergebrachten Informationsträger die Löschung der Toninformation ausgeschlossen wird.

Bei einem motorischen Antrieb des Bildwechselschiebers kann auf der jeweiligen Tonaufzeichnungsspur auch ein Steuersignal in einem unhörbaren Frequenzbereich aufgezeichnet sein, das die Bildwechselbewegung auslöst, um so z.B. die fortlaufende Vorführung einer Ton-Bild-Schau zu ermöglichen. Dies ist beispiels-weise für Vorträge oder Werbeveranstaltungen zweckmäßig.

Ausführungsbeispiele des Gegenstandes der Erfindung werden nachstehend unter Bezugnahme auf die beigefügten Zeichnungen im einzelnen erläutert. Die einzelnen Ausführungsformen umfassen jeweils einige oder mehrere der oben in ihrer Bedeutung erläuterten Merkmale.

Fig. 1 zeigt perspektivisch eine erste Anordnung gemäß der Erfindung,

Fig. 2 zeigt eine Anordnung in etwas abgewandelter Ausführungsform,

Fig. 3 und 4 zeigen schematisch den Verschluß des Magazins in offenem und geschlossenem Zustand für die Ausführungen der Anordnungen nach Fig. 1 bzw. 2 dar,

Fig. 5 zeigt perspektivisch eine dritte Ausführungsform der Anordnung,

Fig. 6 ist ein Querschnitt durch die Anordnung nach Fig. 5 in einer ersten Betriebsstellung,

- 9 -

0139779

Fig. 7 und 8     zeigen die Anordnung nach Fig. 6
in weiteren Betriebsstellungen,

Fig. 9 - 11     zeigen eine abgewandelte Ausführungsform
der Grundbauart nach Fig. 5 in drei Betriebsstellungen,

Fig. 12 - 15   sind Längsschnitte durch die Anordnung zur
Erläuterung der Wechselbewegung im Magazin und
der Bewegung eines Tonabtastkopfes bei einer
weiteren Ausführungsform,

Fig. 16 zeigt perspektivisch den Bewegungsablauf bei der
Anordnung nach Fig. 12 - 15,

Fig. 17 stellt im Längsschnitt durch Magazin und Tonwiedergabeanordnung eine weitere Ausführungsform dar,

Fig. 18 ist ein Längsschnitt ähnlich Fig. 17 in einer anderen Betriebsstellung der Anordnung,

Fig. 19 - 21   zeigen Längsschnitte durch eine Anordnung
in einer weiteren Ausbildung in verschiedenen
Betriebsstellungen,

Fig. 22 und 23   zeigen Details der Anordnungen gemäß
Fig. 19 - 21,

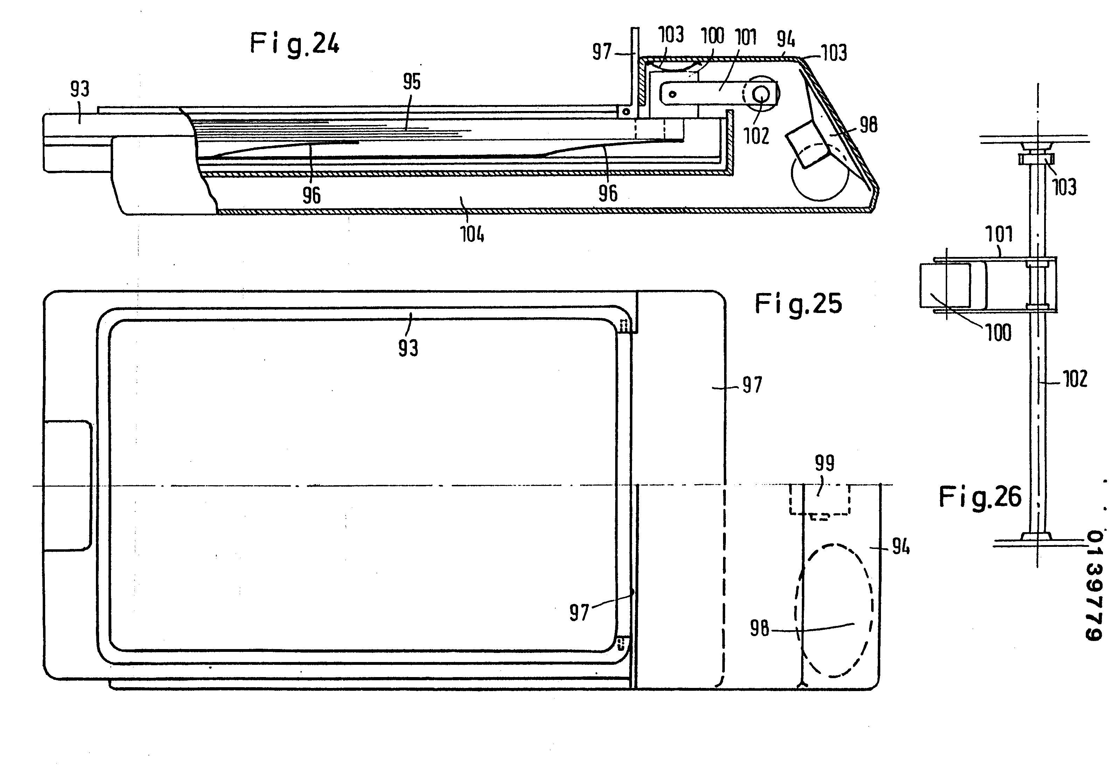

Fig. 24 - 27   beziehen sich auf eine Anordnung nach der
Erfindung in einer weiteren Ausführungsform, bei
der das Magazin auf das Tonwiedergabeteil aufschiebbar ist,

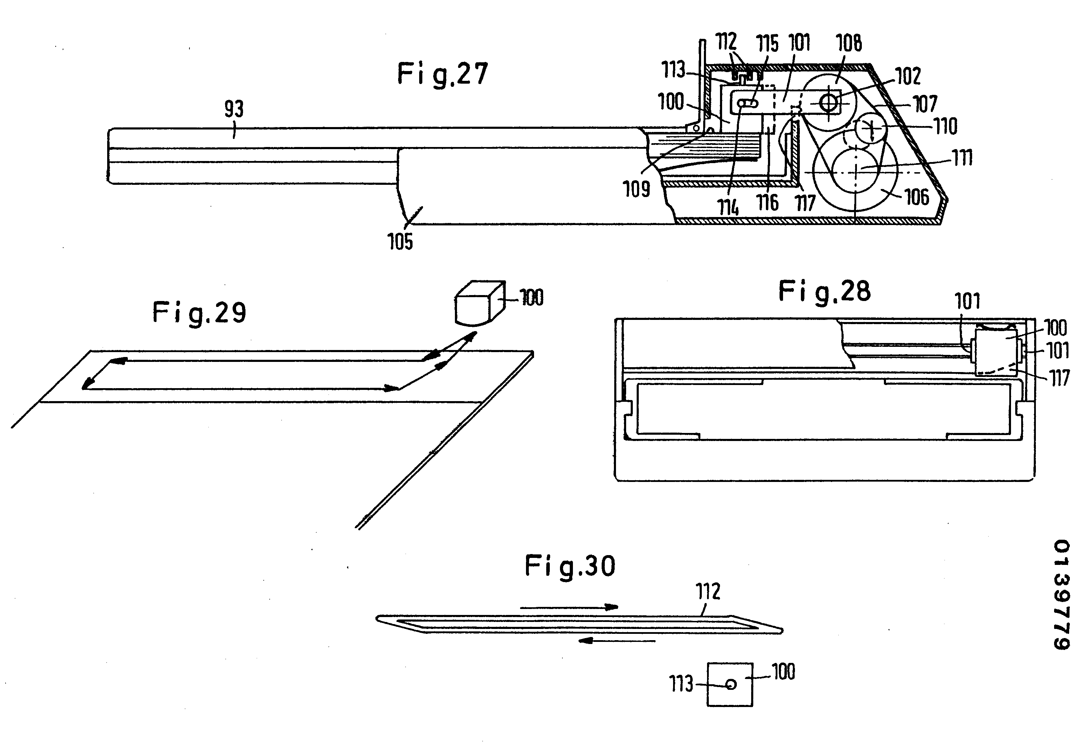

Fig. 28 - 30   zeigen im Teillängsschnitt bzw. in Draufsicht bzw. in Detailansicht eine weitere Ausführungsform der Anordnung,

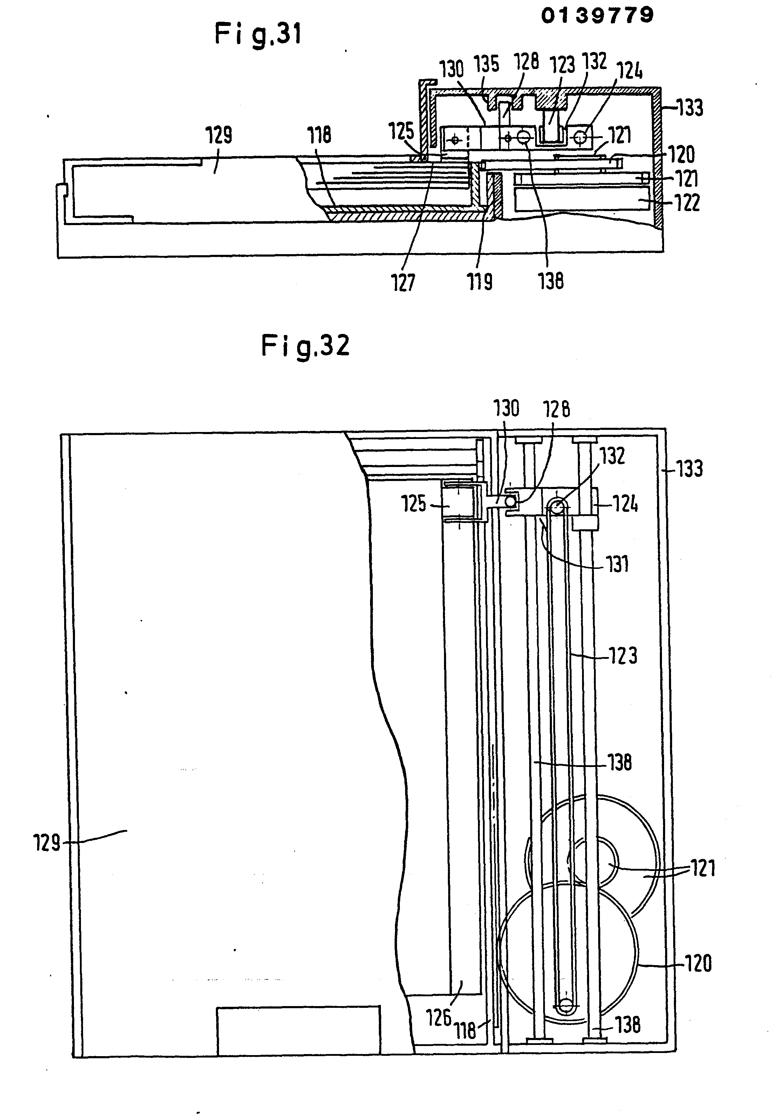

Fig. 31 und 32   dienen der näheren Erläuterung der Ausführungsform nach Fig. 28 - 30,

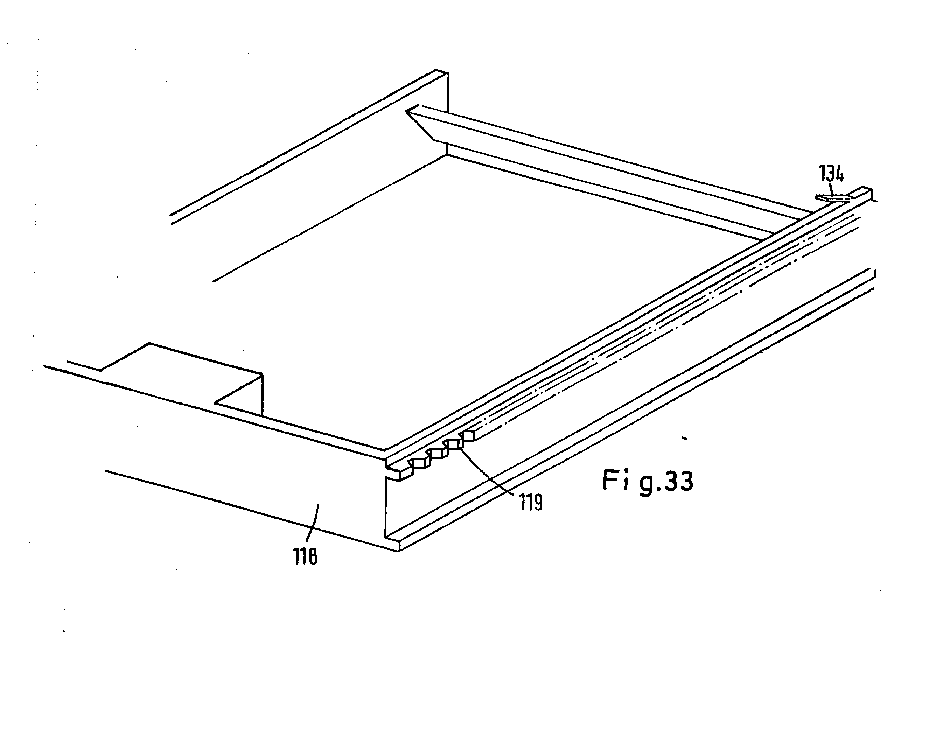

Fig. 33 - 36   zeigen eine Ausführungsform der Anordnung,
bei der die Wechselbewegung des Magazins einen
Energiespeicher auflädt, mit dem die Tonwiedergabeanordnung zu gleichförmiger Bewegung angetrieben
wird, und

- 10 -

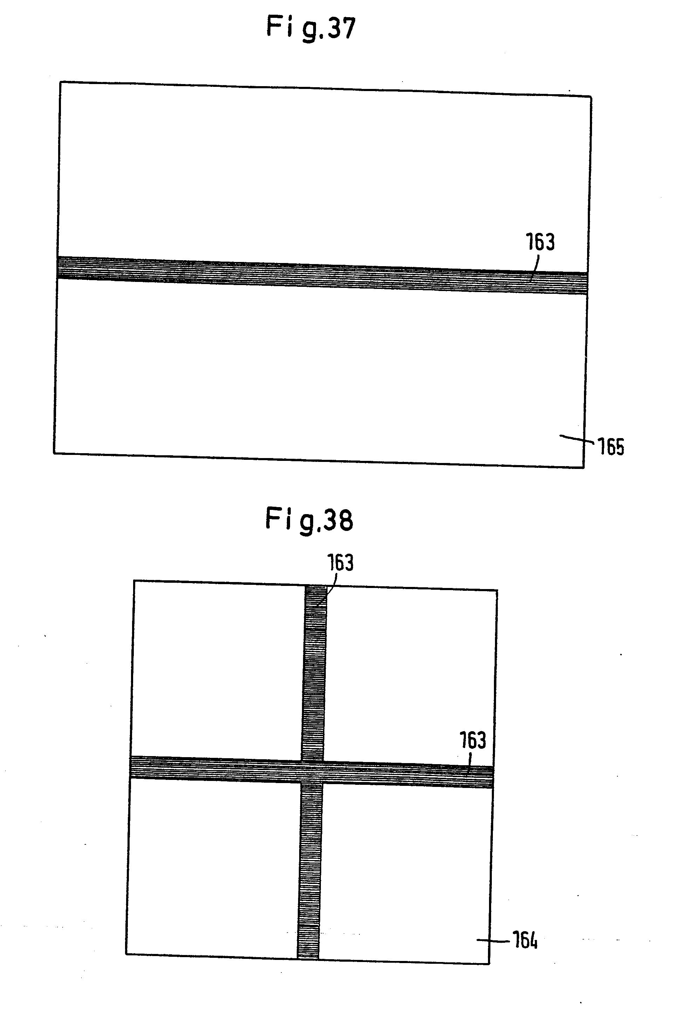

Fig. 37 und 38 zeigen in Draufsicht auf die Rückseite einer Informationsträgerkarte die Anordnung der Toninformation.

In den folgenden Ausführungen wird das Magazin, das die Informationsträgerkarten mit Bild- und Toninformation enthält, als Wechselkassette oder nur kurz als Kassette bezeichnet.

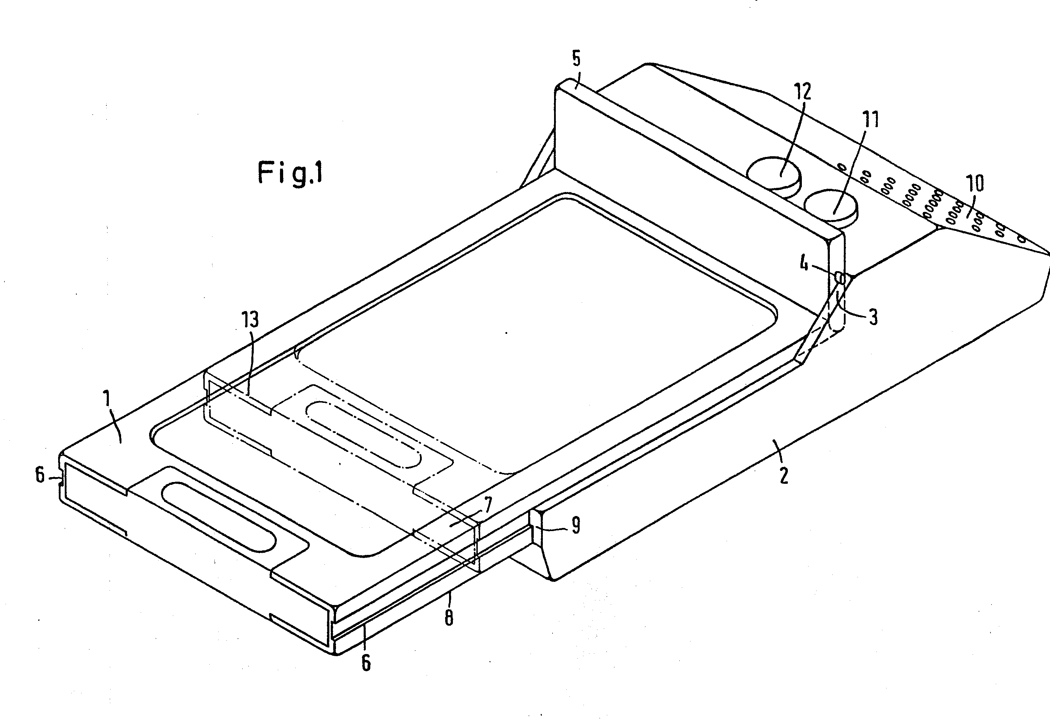

Fig. 1 läßt die Kassette 1 mit den darin befindlichen Informationsträgerkarten (im folgenden kurz "Karten") erkennen, eingeschoben in ein Tonaufnahme- und Wiedergabegerät 2. An der Kassette ist ein Klappdeckel 5 angelenkt, unter dem die auf der Oberseite der Karten befindlichen Toninformationen zugänglich sind. Der Deckel wird durch Einschieben in das Gerät 2 geöffnet, indem seitlich an dem Deckel angebrachte Nocken 4 auf die Schrägfläche 3 auflaufen. Die Trennaht 6 zwischen dem Oberteil 7 und dem Unterteil 8 der aus zwei Teilen zusammengefügten Kassette 1 dient hier zur Führung der Kassette während der Einschubbewegung auf dem Steg 9, und durch Reibung wird die Kassette dann auch gehalten. Man erkennt ferner den akustischen Wandler 10, der entweder als Lautsprecher bei der Wiedergabe oder als Mikrophon bei der Tonaufzeichnung dient, die Auslösetaste 11 für die Tonwiedergabe, die Auslösetaste 12 für die Tonaufzeichnung. Strichpunktiert ist in Fig. 1 angedeutet, daß in das gleiche Gerät 2 auch eine Kassette mit kürzerer Abmessung in Einschubrichtung paßt, vorausgesetzt, daß sie einen gleichartig ausgebildeten Klappdeckel 5 aufweist und in der Breite und dem Breitenprofil identisch ist mit der Kassette 1. Es versteht sich, daß dann die Tonspur auch bei Karten unterschiedlichen Formats immer an derjenigen Kante vorgesehen ist, die bei den unterschiedlichen Längenformaten gleich breit sind.

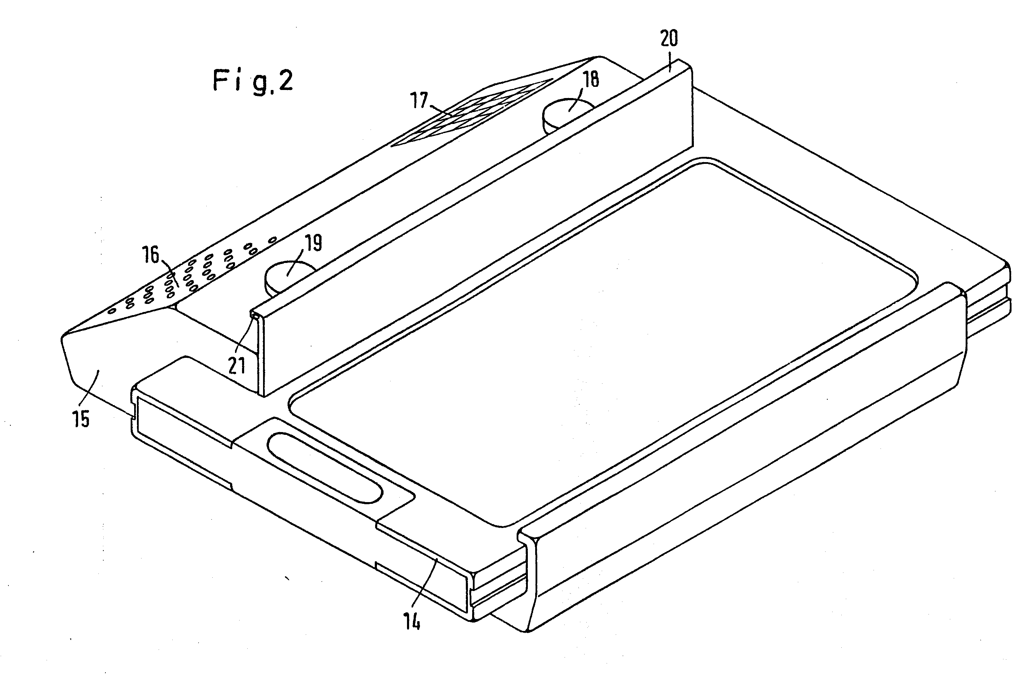

Fig. 2 zeigt eine abgewandelte Ausführungsform der Anordnung, bei der die Tonaufzeichnungen sich ebenfalls auf der Oberseite der Karten befinden, jedoch nicht querverlaufend bezüglich der Bewegung des Wechselschiebers der Kassette, sondern in Parallelrichtung dazu. Man erkennt in Fig. 2 die Kassette 14 in dem Gerät 15 eingeschoben, das hier getrennte akustische Wandler als Lautsprecher 16 und Mikrophon 17 aufweist. Ferner erkennt man

- 11 -

die Aufnahmetaste 17 und die Wiedergabetaste 19 sowie wieder einen Klappdeckel 20 mit Verschlußnocken 21; hier muß das Öffnen des Deckels 20 allerdings von Hand erfolgen und erfolgt nicht selbsttätig durch das Einschieben der Kassette.

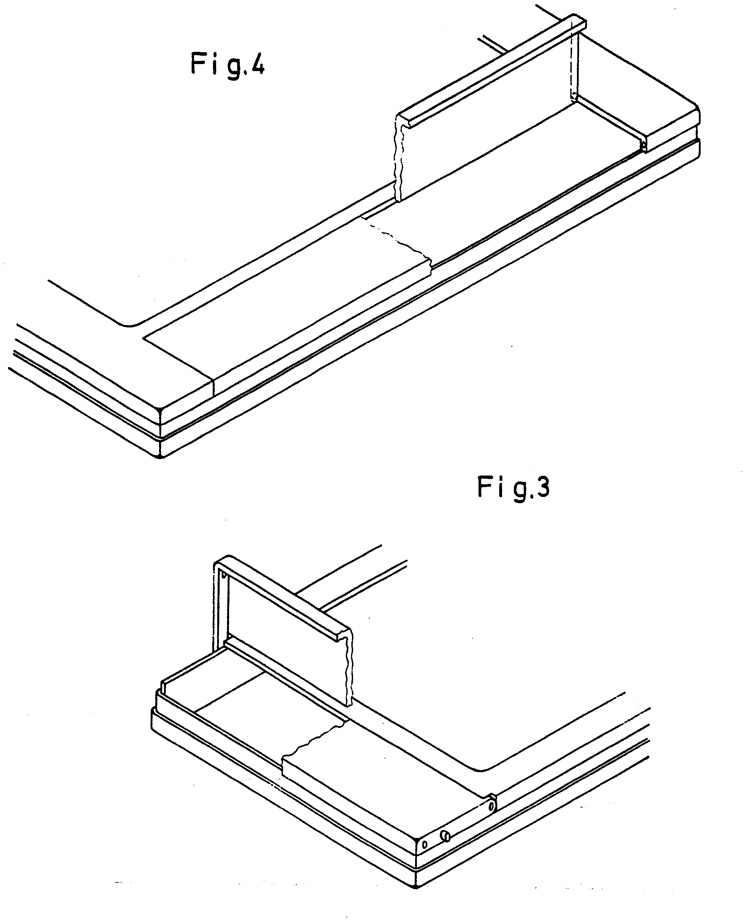

Fig. 3 bzw. 4 lassen das jeweilige mit dem Tonaufzeichnungs- und Wiedergabegerät in Wechselwirkung tretende kantenseitige Ende der betreffenden Kassetten aus Fig. 1 bzw. 2 erkennen, wobei jeweils ein Teil des Klappdeckels geschlossen und der andere Teil geöffnet dargestellt ist. Für die Funktion der Anordnung hinsichtlich Tonaufzeichnung und Wiedergabe könnte man den Klappdeckel im Grunde ganz weglassen, doch dient die Kassette auch zur staubdichten Aufbewahrung der Informationsträgerkarten und kann auch als Aufstell- oder Hängerahmen verwendet werden, wenn die Bildinformation beispielsweise Fotografien umfaßt. Die Ausbildung des Staubschutzes als aufklappbarer Deckel ist nur ein Beispiel für viele konstruktive Möglichkeiten; beispielsweise könnte das Sicht- oder Betrachtungsfenster für die Bildinformation seitlich verschieblich sein, so daß die Oberseite des betrachteten Bildes an der Kante, wo die Toninformation aufgezeichnet ist, freigelegt wird. Ebenso könnte auch der Deckel abnehmbar sein, um ein anderes Gelenk schwenkbar sein, wegschiebbar sein oder in anderer Weise geöffnet werden können. Schließlich könnte man auch den Wechselschieber der Kassette gerade so weit herausziehen, daß die dann an dem Ausziehende des Wechselschiebers befindlichen Toninformationen für die Abtastung zugänglich werden.

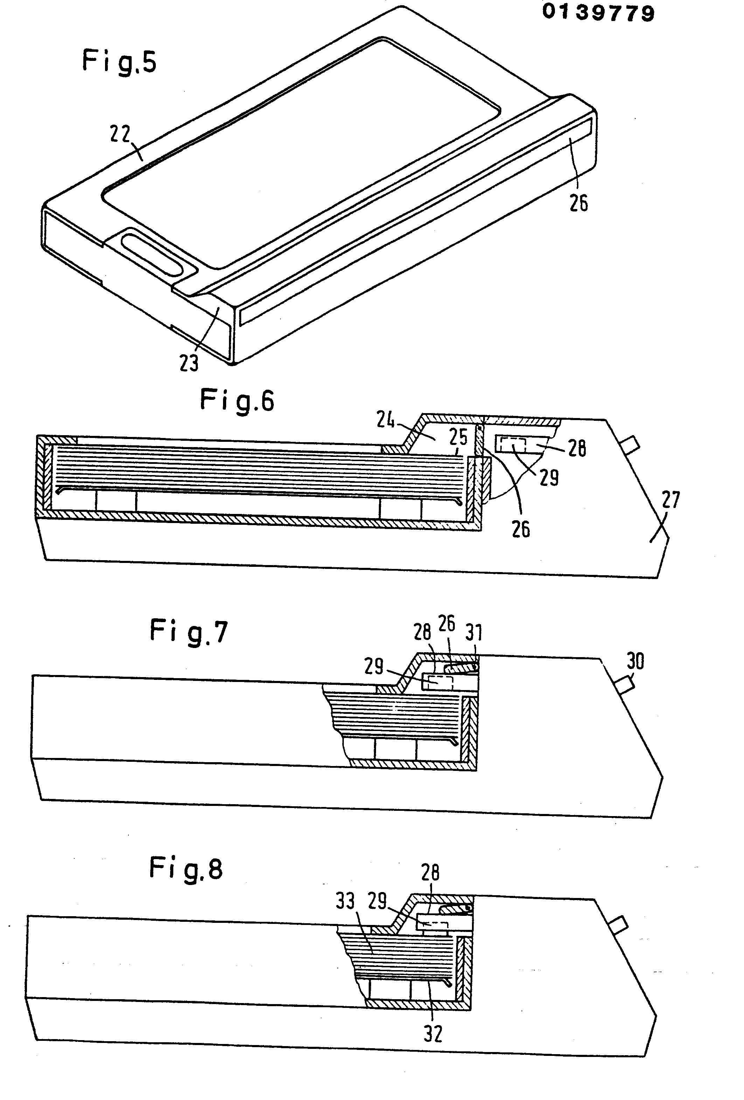

Eine solche Alternative ist in Fig. 5 - 8 dargestellt. Die Kassette 22 hat einen gegenüber dem Hauptteil der Kassette nach oben vorstehenden seitlichen Aufbau 23, an dessen auswärts gekehrter Flanke eine beispielsweise durch einen Klappdeckel oder Schiebedeckel 26 verschließbare Öffnung vorgesehen ist. Die Fig. 6 bis 8 lassen erkennen, daß sich durch die Öffnung, wenn die Kassette in das Aufnahme- bzw. Wiedergabegerät 27 eingeschoben ist, ein Tonkopf 28 in den Hohlraum 24 oberhalb der Tonspur 25 auf dem jeweils oben liegenden Bild einschieben läßt. Der Tonkopf 28 mit dem in ihm enthaltenen Wandler 29 wird dann nach einwärts umschwenken, um das Scharnier 31 des Deckels 26 auf die Tonspur abgesenkt, wobei die in der Kassette vorgesehene Andruckfederanordnung 32 die sichere Anlage des Wandlers 29 an der Tonspur 25 gewährleistet. Die Verschiebung und Absenkung des Tonkopfes 28 mit Wandler 29 erfolgt durch Drücken der Tonaufnahme- oder Wiedergabetaste 30. Der sichere Eingriff zwischen Tonspur 25 und Wandler 29 ist auch dann gewährleistet, wenn der Kartenstapel 33 eine von der dargestellten Dicke abweichende Dicke aufweist, gegebenenfalls nur eine einzige Karte umfaßt, da die Federandruckanordnung 32 bis an das Betrachtungsfenster Vorspannung liefert. Eine nicht dargestellte Schließfeder drückt den Klappdeckel 26 um sein Scharnier 31 wieder in seine Ausgangsstellung zurück, wenn der Tonkopf 28 wieder in seine Ruhestellung gemäß Fig. 6 zurückfährt.

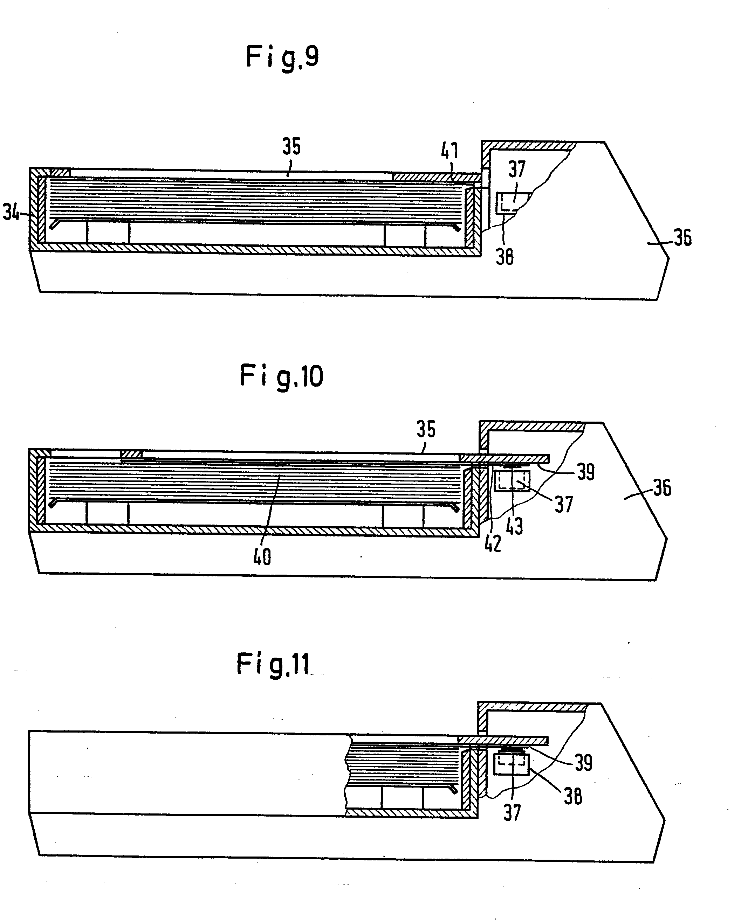

Die Fig. 9 bis 11 zeigen im Querschnitt, senkrecht zur Kartenwechselbewegung der Kassette 34, eine weitere Ausführungsform der Anordnung. Die Kassette 34 wird auf das Tonaufnahme- und Wiedergabegerät 36 aufgesetzt, und duch eine nicht dargestellte Anordnung, gegebenenfalls auch von Hand, kann das Betrachtungsfenster 35 der Kassette seitlich, senkrecht zur Wechselbewegung der Kassette, in einen entsprechend bemessenen Schlitz des Geräts 36 um ein kurzes Stück eingeschoben werden. An der Unterseite des Fensters 35, dem Kartenstapel 40 zugekehrt, ist ein Haftbelag angeordnet, beispielsweise rings um den Betrachtungsausschnitt des Fensters, so daß bei der Verschiebung des Fensters 35 die oberste Karte mit in den Schlitz des Gerätes 36 transportiert wird. An der Unterseite der Karten befindet sich jeweils parallel zu der eingeschobenen Fensterkante eine Toninformationsspur, die nach dem Einschieben der obersten Karte mittels des Fensters von unten zugänglich ist. Im Gerät 36 ist der Wandler 37 in einem Halter 38 angeordnet. Nach Einschieben der Karte kann durch Betätigen einer Aufnahme- oder Wiedergabetaste der Wandler 37 aus seinem Halter 38 nach obn in federnde Anlage an der Tonspur 43 der obersten Karte 42 gebracht werden, und der Wandler wird dann zu einer Relativbewegung, senkrecht zur Zeichnungsebene, in der einen oder anderen Richtung von der einen Endlage bis zur anderen Endlage angetrieben. Diese Ausführungsform für Informationsträgerkarten, bei denen die Tonspur auf der Unterseite der Bildaufzeichnung angeordnet ist, ist nur ein Beispiel für mögliche Konstruktionen. Diese Anordnung ist ein Beispiel dafür, daß es prinzipiell möglich ist, trotz Anordnung der Toninformation auf der Unterseite der Karte Bildbetrachtung und Aufzeichnen oder Wiedergeben der zugehörigen Toninformation gleichzeitig vorzunehmen. Weitere Beispiele für solche Anordnungen werden weiter unten beschrieben.

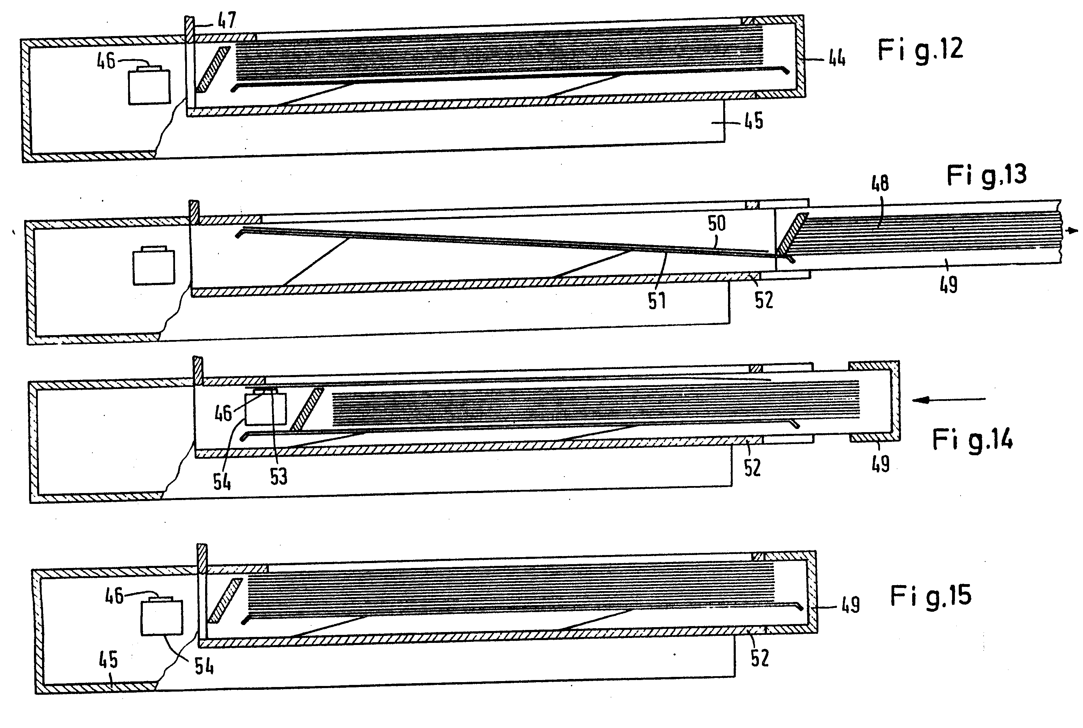

Ein zweites Beispiel für eine Anordnung, bei der Bildinformation auf der Karte oben, die Toninformation unten vorgesehen sind, ist in den Fig. 12-15 dargestellt. Die Kassette 44 ist auf das Tonaufnahme- und Wiedergabegerät 45 aufgesetzt. Auf der dem Tonkopf 46 zugewandten Seite der Kassette 44 ist die Seitenwand 47 der Kassette durch Hochklappen oder Hochschieben entfernt, so daß die gesamte Seitenfläche der Kassette zugänglich ist. Wie man in Fig. 13 erkennt, erfolgt in der Kassette gerade ein Kartenwechsel. Während der Kartenstapel 48 mittels des Schiebers 49 nach außen gezogen wird, bleibt die unterste Karte 50, weil sie an einem auf der Andruckanordnung 51 angebrachten Haftbelag festgehalten wird, in dem Gehäuse 52 der Kassette zurück.

In Fig. 14 erkennt man die Lage von Gehäuse 52 und Schieber 49 nahe dem Ende des Kartenwechselvorgangs. Der Rückhub des Schiebers 49 wird jedoch abgestoppt, bevor der Schieber 49 ganz im Gehäuse 52 zurückgedrückt worden ist. Durch Betätigen einer entsprechenden Taste wurde nämlich der Tonkopf 46 in Richtung auf die Kassette 44, durch deren nun offene Seitenwandung, in die Kassette hineinbewegt und hat sich von unten an die Tonspur 53 angelegt, die auf der Unterseite der nunmehr durch die am Schieber 49 befindliche und in der Zeichnung angedeutete Schrägfläche nach oben transportierten Karte 50 befindet.

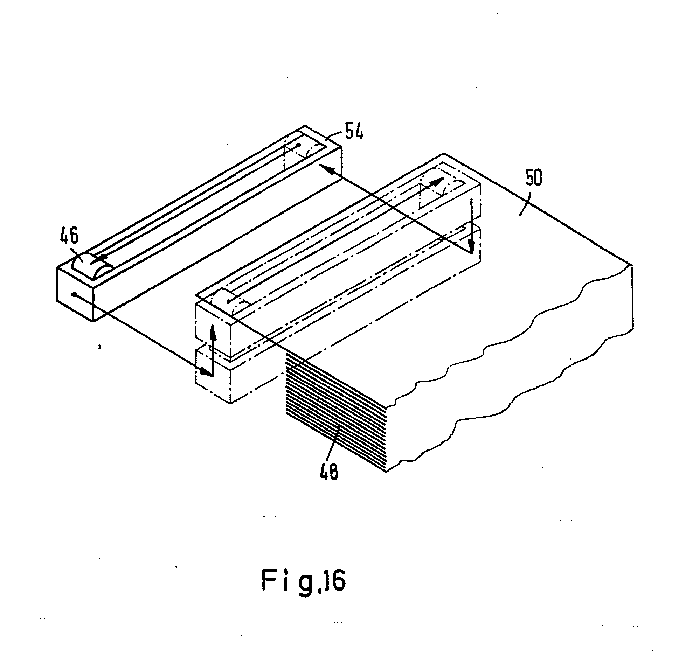

Die Tonspur 53 kann nun durch Bewegung des Tonkopfes 46 in Richtung senkrecht zur Zeichnungsebene abgetastet werden. Nach beendeter Tonaufnahme oder Wiedergabe wird der Schieber 49 vollends in das Gehäuse 52 eingeschoben. Dies veranlaßt die Rückbewegung des Tonkopfes 46 und seines kanalartigen Trägers 54 in das Gerät 45. Fig. 16 zeigt perspektivisch, weitgehend schematisiert, den Bewegungsablauf des Trägers 54 mit dem längs des Trägers beweglichen

- 14 -

Tonkopf 46, relativ zum Kartenstapel 48 und relativ zu der jeweils obersten Karte 50.

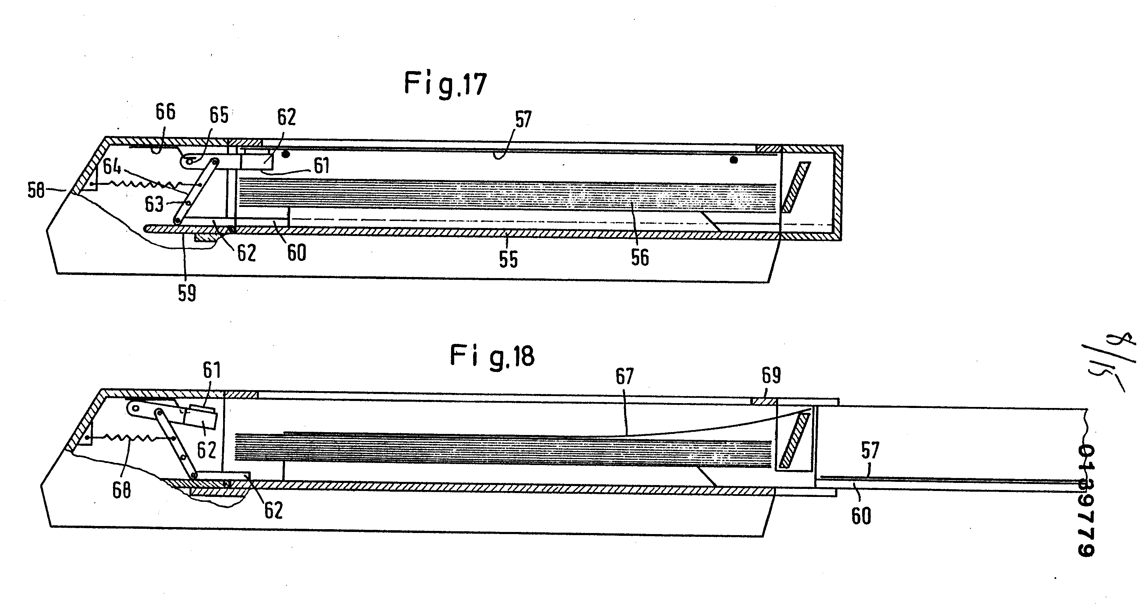

Bei der Ausführungsform nach Fig. 17 und 18 enthält die Kassette 55 einen Bilderstapel 56 sowie ein von dem Stapel 56 abgehobenes und dadurch separat in einer Etage liegendes Einzelbild 57. Die Kassette ist auf das Aufnahme- und Wiedergabegerät 58 aufgesetzt. An der dem Tonkopfteil des Geräts 58 zugewandten Seite der Kassette 55 ist die Kassettenseitenwand 59 weggeklappt, und zwar nach unten. Unter Steuerung durch den Kassettenschieber 60 wird der als Kanal 62 ausgebildete Tonkopfträger mit dem Tonkopf 61 an die Unterseite des separat liegenden Bildes 57 an der Stelle gedrückt, wo dieses die Toninformation als Spur aufgetragen aufweist. Der Tonkopf kann sich dann in dem kanalartigen Träger 62 unter Abtastung der Spur bewegen.

Der Schieber 60 drückt gegen den Gelenkhebel 62. Dadurch wird der mittels Welle 63 gelagerte Hebel 64 so weggeschwenkt, daß der ebenfalls gelenkig gelagerte Tonkopfträger 62 sich in die Kassette hineinverschiebt. Dabei laufen Nocken 65 auf der Blattfeder 66 entlang, die einen Anpreßdruck auf den Tonkopf 61 in Richtung auf die Tonspur an der Unterseite des separat liegenden Bildes 57 entwickelt.

Fig. 18 läßt erkennen, wie mittels des Schiebers der Kassette 55 das vorher oberste Bild 57 gegen das zweitoberste Bild 67 ausgewechselt wird. Durch diesen Wechselvorgang wird der Druck des Schiebers 60 auf den Hebel 62 abgebaut, so daß das gesamte Hebelsystem mit dem kanalartigen Tonkopfträger 62 und Tonkopf 61 von der Feder 68 nach hinten und aus der Kassette herausgezogen wird. Der Schieber 60 rastet bei volleingeschobener Position mit relativ starker Reibung im Gehäuse 69, so daß die Feder 68 den Schieber 60 nicht wieder aus dem Gehäuse 69 der Kassette herausdrücken kann.

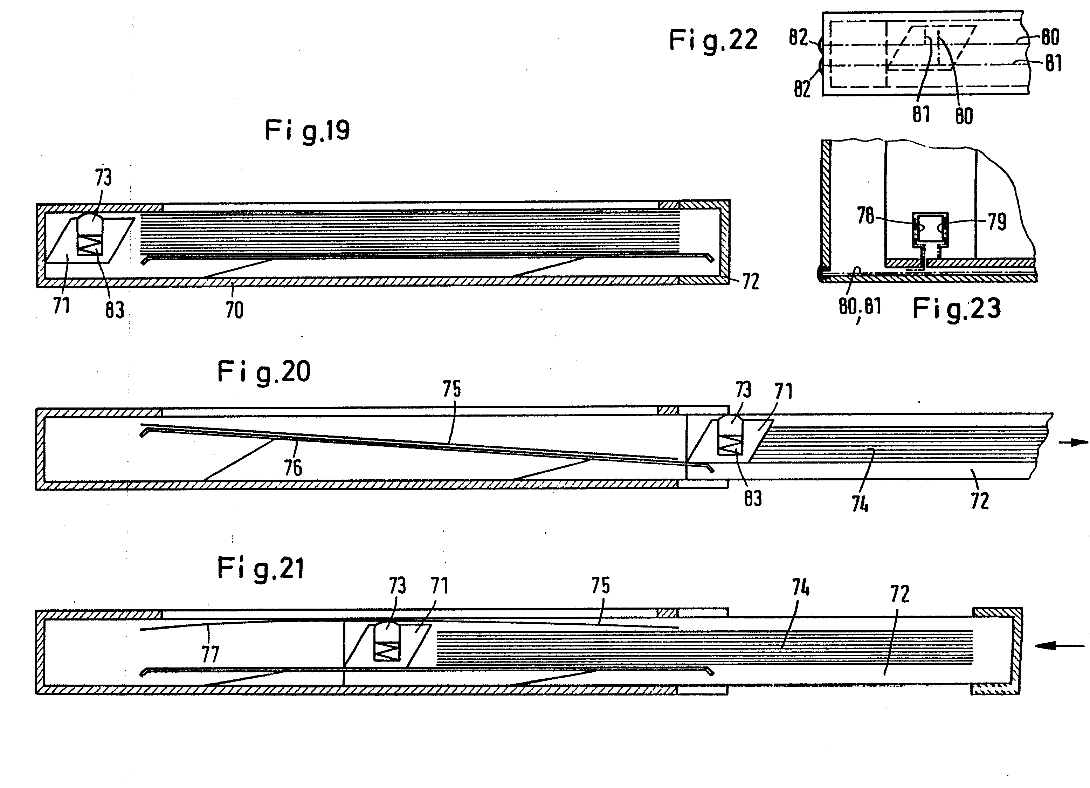

Fig. 19 bis 23 zeigen eine Anordnung mit einer Wechselkassette 70, bei der ein Tonkopf 73 in der Kassette selbst, und zwar im Separatorsteg 71 des Schiebers 72 auswärts federnd vorgespannt gelagert ist.

Fig. 19 zeigt die Kassette 70 im geschlossenen Zustand.

Fig. 20 zeigt die Kassette 70 mit herausgezogenem Schieber 72. Beim Herausziehen des Schiebers wurde auch der Kartenstapel 74 mit nach außen gezogen, während die unterste Karte 75 auf der federnden Andruckplatte 76 durch einen auf dieser vorgesehenen Haftbelag zurückgehalten wird. Der Tonkopf 73 hatte während dieser Phase des Wechselvorgangs keine Funktion.

Beim Rückschub des Stapels 74 mittels des Schiebers 72 in die Kassette 70 gemäß Fig. 21 gelangt die bis jetzt unterste Karte 75 über den Separatorsteg 71 hinweg nun an die oberste Stelle des Stapels 74. Während dieser Rückschubphase des Schiebers schleift der Tonkopf 73 über die ganze Länge der Kartenunterseite 77, wo in Ausfluchtung mit dem Tonkopf eine Tonaufzeichnungsspur vorgesehen ist. Die von dem Tonkopf abgetasteten elektrischen Impulse werden in dem Aufnahme- bzw. Wiedergabegerät gespeichert und nach beendetem Wechselvorgang abgerufen. Mittels nicht gezeigter Einrichtungen wird ein für die Geschwindigkeit der Relativbewegung zwischen Karte und Tonkopf repräsentatives Signal ebenfalls zum Abspielgerät übertragen, um die zeitsynchrone Wiedergabe nach der Speicherung zu gewährleisten.

Man erkennt in Fig. 22 und 23 die elektrischen Anschlüsse 78, 79, die über Schleifkontakte auf die Kontaktschienen 80 bzw. 81 durch verbunden werden. Das Abspielgerät wird mit den elektrischen Impulsen über Kontakte versorgt, die an den beiden Kontaktnieten 82 anliegen.

Durch eine Kulissensteuerung beispielsweise könnte dafür gesorgt werden, daß der Tonkopf wenigstens beim Herausziehen des Schiebers nicht mit Vorspannung an dem Fensterbereich der Kassette anliegt, indem die Federandruckanordnung 76 inaktiviert wird, oder indem alternativ die Vorspannung der Feder 83 unwirksam gemacht wird.

Anhand der Anordnungen nach Fig. 24-30 sollen Aufbau und Antrieb eines Tonkopfes im Zusammenhang mit einer Informationskartenkassette erläutert werden.

Fig. 24 läßt die Kassette 93 in Verbindung mit dem Tonaufzeichnungs- und Wiedergabegerät 94 im Querschnitt erkennen. In der Kassette befindet sich der Kartenstapel 95, der mittels Federn 96 nach oben teilweise gegen den Tonkopf 100 angedrückt wird. Der Deckel 97 der Kassette ist offen. Im Aufzeichnungs- und Wiedergabegerät befinden sich ein Lautsprecher 98 und eine Batterie 99. Der Tonkopf 100 ist gelenkig am Mitnehmer 101 gelagert, der mittels einer Gewindespindel und längs dieser vor- und zurückbeweglich ist. Eine Feder 103 bewirkt den Anpreßdruck des Tonkopfes 100. Der Raum 104 nimmt den elektronischen Teil des Gerätes auf.

Fig. 25 zeigt in Draufsicht, im oberen Teil, die Kassette 93 mit dem Deckel 97 allein, während der untere Teil der Fig. 25 die Kassette 93 in Verbindung mit dem Gerät 94 darstellt.

Fig. 26 läßt den Tonkopf 100 mit Mitnehmer 101 und Spindel 102 sowie Antriebsritzel 103 erkennen.

Fig. 27 stellt ein in den Abmessungen etwas kleineres Aufzeichnungs- und Wiedergabegerät 105 in Verbindung mit einer Kassette 93 dar. Man erkennt einen Antriebsmotor 106 mit Antriebsriemenscheibe 111, die über ein Zugmittelgetriebe 107 in Wirkverbindung mit dem Antriebsrad 108 steht, das seinerseits fest auf die Gewindespindel 102 aufgekeilt ist. Wenn der Tonkopf 100 einmal längs der Tonspur auf der verlängerten Kartenoberseite 109 geführt worden ist, so bewirkt dies einerseits eine Versetzung des Zwischenrades 110 und andererseits die Verschiebung des Tonkopfs 100 in eine zweite Position 116. Durch das Umschalten des Zwischenrades 110 wird in Reibungsschluß mit den beiden Rädern bzw. Scheiben 108, 111 die Drehrichtung der Gewindespindel 102 derart umgekehrt, daß der Tonkopf bei der Spindeldrehung wieder zurückwandert. Andererseits sorgt eine Kulisse 112, in der ein am Tonkopf 100 befestigter Zapfen 113 geführt wird, daß der Rücklauf des Kopfes nicht genau auf der Hinwärtsspur erfolgt, sondern parallel zu dieser. Auf diese Weise wird die Kapazität der Tonspur verdoppelt. Der Tonkopf kann sich mittels seiner Lagerzapfen 114 in den beiden Lagerschlitzen 115 des Mitnehmers 101 der Kulissensteuerung bewegen.

Fig. 28 zeigt den Tonkopf 100 in Ausgangs- bzw. Endstellung, abgehoben von der Kartenoberseite und der darauf befindlichen Tonspur.

Dies wird durch Auflaufen des Mitnehmers 101 auf die Keilschiene 117 bewirkt. Zugleich wird durch das Abheben des Tonkopfes bzw. des Mitnehmers das Gerät elektrisch ausgeschaltet.

Fig. 29 zeigt schematisch die Bahn, die vom Tonkopf 100 zwischen Start und Stop zurückgelegt wird.

Fig. 30 zeigt als Beispiel die Ausbildung der Kulisse 112 mit Tonkopf 100 und Zapfen 113.

Die Anordnung nach Fig. 31 bis 36 zeigt eine Ausführungsform, bei der die Energie für den Tonkopftransport durch die Schieberbewegung aufgebracht und gespeichert wird.

Man erkennt in Fig. 31 die mit dem Gerät 133 verbundene Kassette 129 im Querschnitt. Der Schieber 118 weist seitlich eine Zahnstange 119 auf, die mit dem Zahnrad 120 kämmt. Das Zahnrad 120 bildet zusammen mit weiteren Getrieberädern 121 ein Übersetzungsgetriebe, kuppelt mit einer Hemmwerk/Speicherfedereinheit 122; die Speicherfeder kann nach Art eines Federhauses aufgebaut sein, wie es in Ihren üblich und bekannt ist.

Wird durch Niederdrücken einer Taste Tonaufnahme oder Tonwiedergabe ausgelöst, so wird das Hemmwertk 122 entsperrt, und die Feder läuft mit definierter Geschwindigkeit ab unter Antrieb des Bandes 123, das seinerseits über den Schlitten 124 den Tonkopf 125 antreibt. Durch eine Kulissensteuerung 135 wird der Tonkopf am Ende der Tonspur 126 von der Kartenoberseite 127 abgehoben, indem der Zapfen 128 auf die der Kassette 129 abgewandte Seite gelenkt wird, und so die Tonkopfhalterung 130 nach oben verschwenkt. Der Mitnehmer 131 am Band 123 ändert nach dem Passieren der Umlenkrolle 132 die Bewegungsrichtung und führt den Tonkopf 125 in seine Ausgangslage zurück, indem er am hinteren Teil des Mitnehmers 124, der zum vorderen Teil versetzt angeordnet ist, angreift.

Fig. 32 läßt die Kassette 129 und den Antriebsteil 133 in Draufsicht erkennen. Fig. 33 zeigt den Schieber 118 der Kassette mit der seitlich angeordneten Verzahnung 119 sowie mit dem Mitnehmer 124, der den Tonkopf 125, wenn die Antriebsenergie nach mehrmaligem Gebrauch erschöft ist, für den nächsten Bildwechsel in die Ausgangslage zurückführt.

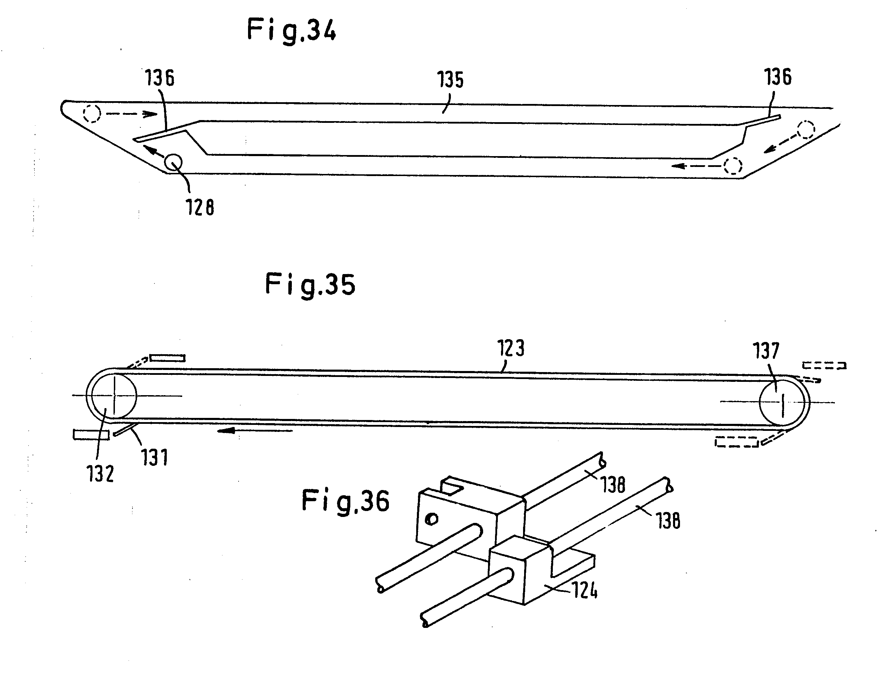

Fig. 34 läßt die Kulisse 135 erkennen, mittels der der Zapfen 128 den Tonkopf 125 auf die Aufzeichnungsspur 126 aufsetzt bzw. von dieser abhebt. Die beiden Federzungen 136 sorgen dafür, daß der Zapfen 128 bei Umkehr der Bewegungsrichtung mit Sicherheit in die andere Kulissenführung zurückgebracht wird.

Fig. 35 läßt das Transportband 123 mit dem Mitnehmer 131 erkennen, der auf den Schlitten 124 - dargestellt in Fig. 36 - einwirkt. Bei der Rolle 132 verläßt der Mitnehmer 131 den Vorderteil des Schlittesn 124 und hakt beim Hinterteil wieder ein. An der zweiten Umlenkrolle 137 ändert sich der Bewegungsablauf in die entgegengesetzte Richtung. Der Schlitten 124 bewegt sich auf zwei Stangen 138 gelagert hin und her.

Kassette und Tonbandgerät sind während Aufnahme bzw. Wiedergabe so miteinander verbunden, daß sie erst dann voneinander getrennt werden können, wenn der Tonkopf in seine Ausgangslage zurückgekehrt und von der Karte bzw. der auf dieser befindlichen Tonspur abgehoben hat.

Die Fig. 37 und 38 lassen die Anbringung der Tonspuren 163 auf der Rückseite eines quadratischen Bildes (Bild 38) bzw. eines rechteckigen Bildes (Fig. 37) erkennen. Diese symmetrische Anordnung der Tonspur ermöglicht die Vertonung in jeder der vier möglichen bzw. zwei möglichen Lagen des Bildes in der Kassette, sofern der Tonkopf in Ausfluchtung mit der Mittelachse der Karte abläuft.

Ansprüche                    49/50-E
——————————————

1)  Bildbetrachtungs- und Tonaufnahme- und/oder Wiedergabeanordnung für Informationsträgerkarten, auf deren Fläche die Bildinformation und die zugehörige Toninformation bzw. ein Speicher für
diese untergebracht sind, dadurch gekennzeichnet, daß die Mehrzahl
von Karten als loser Stapel in einem Magazin mit einem Sichtfenster für die Bildinformation der obersten Karte im Stapel untergebracht ist, und daß das Magazin einen, parallel zum Sichtfenster,
aus dem Magazin heraus- und wieder hineinverschieblichen Wechselschieber zum zyklischen Auswechseln der am Sichtfenster präsentierten Karte aufweist, wobei die Toninformation der jeweils nach
einem Wechselvorgang vollständig im Sichtfenster präsentierten
Karte mindestens einmal vollständig durch ein im Magazin ganz oder
teilweise eingebautes bzw. an dieses ankoppelbares Tonaufnahme-
und/oder -wiedergabegerät aufgezeichnet und /oder wiedergegeben
werden kann.

2)  Anordnung nach Anspruch 1, dadurch gekennzeichnet, daß die
Toninformation in an sich bekannter Weise durch Bewegen eines Aufzeichnungs- bzw. Wiedergabekopfes längs einer Spur des Speichers
aufgezeichnet bzw. wiedergegeben wird.

3)  Anordnung nach Anspruch 2, gekennzeichnet durch Anwendung
des Magnettonverfahrens.

4)  Anordnung nach Anspruch 2, gekennzeichnet durch Anwendung
des Lichttonverfahrens.

5) Anordnung nach Anspruch 1 oder 2, dadurch gekennzeichnet, daß homologe Stellen der Karten für die Toninformation vorgesehen sind.

6) Anordnung nach Anspruch 5, dadurch gekennzeichnet, daß für die Toninformation ein Speicher auf der Bildseite jeder Karte neben der Bildinformation vorgesehen ist.

7) Anordnung nach Anspruch 2 und 6, dadurch gekennzeichnet, daß der Speicher längs einer oder mehreren Kartenkanten verlaufend ausgebildet ist.

8) Anordnung nach Anspruch 5, dadurch gekennzeichnet, daß für die Toninformation ein Speicher auf der Rückseite jeder Karte vorgesehen ist.

9) Anordnung nach Anspruch 8, dadurch gekennzeichnet, daß die gesamte Rückseite jeder Karte mit einem Speichermedium für die Toninformation versehen ist.

10) Anordnung nach Anspruch 2 und 8, dadurch gekennzeichnet, daß der Speicher streifenförmig parallel zu mindestens einer Kartenkante verlaufend vorgesehen ist.

11) Anordnung nach Anspruch 10, dadurch gekennzeichnet, daß der Speicher längs mindestens einer Kartenkante verlaufend vorgesehen ist.

12) Anordnung nach Anspruch 10, dadurch gekennzeichnet, daß der Speicher mittig zwischen zwei Kartenkanten verlaufend vorgesehen ist.

13) Anordnung nach Anspruch 1, dadurch gekennzeichnet, daß alle Komponenten des Tonaufnahme- und -wiedergabegerätes vollständig in dem Magazin angeordnet sind.

14) Anordnung nach Anspruch 1, dadurch gekennzeichnet, daß ein Teil der Komponenten des Aufnahme- und -wiedergabegerätes in das Magazin, die übrigen Komponenten in ein Zusatzteil eingebaut sind.

15) Anordnung nach Anspruch 1, dadurch gekennzeichnet, daß alle Komponenten des Aufnahme- und -wiedergabegerätes in ein Zusatzteil eingebaut sind.

16) Anordnung nach Anspruch 14 oder 16, dadurch gekennzeichnet, daß das Zusatzteil auswechselbar mit dem Magazin gekuppelt ist.

17) Anordnung nach Anspruch 16, dadurch gekennzeichnet, daß das Zusatzteil mit Magazinen unterschiedlicher Größe kuppelbar ist.

- 2 -

18) Anordnung nach Anspruch 16 oder 17, dadurch gekennzeichnet, daß die räumliche Zuordnung der auf den Karten befinflichen Speicher zu der unmittelbar mit ihnen in Wirkverbindung tretenden Komponente des Aufnahme- und -wiedergabegerätes durch die Kupplung sichergestellt ist.

19) Anordnung nach Anspruch 15 und 18, dadurch gekennzeichnet, daß das Magazin einen Deckel aufweist, bei dessen Öffnung die Speicher für die unmittelbar mit ihnen in Wirkverbindung tretende Komponente des Aufnahme- und -wiedergabegerätes zugänglich sind.

20) Anordnung nach Anspruch 2 und 19, dadurch gekennzeichnet, daß die vom Deckel verschlossene Öffnung des Magazins die gesamte Speicherspur freilegt.

21) Anordnung nach Anspruch 19 oder 20, dadurch gekennzeichnet, daß der Deckel durch den Kupplungsvorgang geöffnet und durch den Entkupplungsvorgang geschlossen wird.

22) Anordnung nach Anspruch 6 und 19, dadurch gekennzeichnet, daß eine durch den Deckel verschlossene Öffnung auf der Sichtfensterseite des Magazins ausgebildet ist.

23) Anordnung nach Anspruch 6 und 19, dadurch gekennzeichnet, daß eine durch den Deckel verschlossene Öffnung an einer quer zum Sichtfenster verlaufenden Seite des Magazins ausgebildet ist.

24) Anordnung nach Anspruch 23, dadurch gekennzeichnet, daß neben dem Sichtfenster des Magazins ein parallel zur Tonspur verlaufender Hohlraum innerhalb des Magazins vorgesehen ist, der durch den Deckel verschlossen ist und in dem ein Tonkopf bewegbar ist.

25) Anordnung nach Anspruch 24, dadurch gekennzeichnet, daß der Tonkopf des Aufnahme- und -wiedergabegerätes einen parallel zum Magazinsichtfenster durch die bei geöffnetem Deckel freigegebene Öffnung in das Magazin einführbaren Träger umfaßt, aus dem der Wandlerteil des Tonkopfes auf die Tonspur zu beweglich ist.

26) Anordnung nach Anspruch 8 und 18, dadurch gekennzeichnet, daß die jeweils vor dem Magazinsichtfenster liegende Karte durch einen Seitenschlitz des Magazins in Wirkverbindung mit dem Tonkopf des Zusatzteils bewegbar ist.

27) Anordnung nach Anspruch 26, dadurch gekennzeichnet, daß die Karte mittels eines Verschiebedeckels, der einen Mitnehmer aufweist, durch den Schlitz bewegbar ist.

28) Anordnung nach Anspruch 27, dadurch gekennzeichnet, daß eine Klarsichtscheibe des Sichtfensters als Verschiebedeckel ausgebildet ist.

29) Anordnung nach Anspruch 8 und 18, dadurch gekennzeichnet, daß das Magazin derart ausgebildet ist, daß die jeweils kurz vor Abschluß eines Wechselschieberzyklus an der Sichtscheibe präsentierte Karte zumindest an einer Kante von unten frei zugänglich ist, daß an dieser freien Kante der Speicher angeordnet ist, und daß das Magazin an der dieser freien Kante zugewandten Seite eine verschließbare Öffnung aufweist, durch welche ein Tonkopf in das Magazin einführbar ist, wenn der Wechselschieber beinahe eingeschoben ist.

30) Anordnung nach Anspruch 29, gekennzeichnet durch eine Rasteinrichtung am Magazin und/oder am Zusatzteil, durch welche dem Benutzer die betreffende Wechselschieberposition kenntlich gemacht wird.

31) Anordnung nach Anspruch 29 oder 30, dadurch gekennzeichnet, daß der Tonkopf einen parallel zum Magazinsichtfenster durch die Öffnung einführbaren Halter umfaßt, längs dem ein Wandlerteil des Tonkopfes die Spur auf der Kartenunterseite abtastet.

32) Anordnung nach Anspruch 25 oder 31, dadurch gekennzeichnet, daß das Wandlerteil für den Rücklauf von der Spur des Speichers abhebbar ist.

33) Anordnung nach Anspruch 8 und 18, dadurch gekennzeichnet, daß das Magazin derart ausgebildet ist, daß die jeweils dem Sichtfenster präsentierte Karte vom Kartenstapel abgehoben ist und für einen seitlich in das Magazin einführbaren Tonkopf von unten zugänglich ist.

34) Anordnung nach Anspruch 2 und 14, dadurch gekennzeichnet, daß der Tonkopf in den beweglichen Wechselschieber eingebaut ist.

35) Anordnung nach Anspruch 34, dadurch gekennzeichnet, daß der Tonkopf bei der Wechselbewegung des Schiebers in Wirkverbindung mit der ihm jeweils zugekehrt liegenden Tonspur steht.

- 4 -

36) Anordnung nach Anspruch 35, gekennzeichnet durch eine elektronische Kompensationsschaltung zum Kompensieren unterschiedlicher Bewegungsgeschwindigkeiten des Wechselschiebers bezüglich der Tonwiedergabedauer.

37) Anordnung nach Anspruch 35, dadurch gekennzeichnet, daß der Tonkopf über Schleifkontakte mit aus dem Magazin herausragenden Leitungen verbunden ist, die an elektronische Schaltkreise im Zusatzteil anschließbar sind.

38) Anordnung nach Anspruch 18, dadurch gekennzeichnet, daß das Magazin eine Federandruckanordnung enthält, mittels der die Karten auf das Sichtfenster zu vorgespannt sind, und daß die Federandruckanordnung zugleich den federnden Kontakt mit einem Tonkopf bewirkt.

39) Anordnung nach Anspruch 18, dadurch gekennzeichnet, daß ein Tonkopf motorisch angetrieben längs der Spur beweglich ist.

40) Anordnung nach Anspruch 39, dadurch gekennzeichnet, daß der Antriebsmotor eine Gewindespindel antreibt, auf der ein als Mutter ausgebildeter Tonkopfträger sitzt.

41) Anordnung nach Anspruch 40, dadurch gekennzeichnet, daß die Drehrichtung der Spindel umkehrbar ist.

42) Anordnung nach Anspruch 41, dadurch gekennzeichnet, daß der Wandlerteil des Tonkopfs relativ zum Träger und quer zur Spindel zwischen einer ersten und einer zweiten Spur verschieblich ist.

43) Anordnung nach Anspruch 42, dadurch gekennzeichnet, daß der Wandlerteil kulissengesteuert bei Spindeldrehung in der einen Richtung die erste Spur, bei Spindeldrehung in der anderen Richtung die zweite Spur abtastet.

44) Anordnung nach Anspruch 2, gekennzeichnet durch einen mechanischen Energiespeicher, dem die Antriebsenergie für den Tonkopf entnehmbar ist und der durch die Wechselschieberbewegung des Magazins aufladbar ist.

45) Anordnung nach Anspruch 18 und 44, dadurch gekennzeichnet, daß der Energiespeicher im Zusatzteil untergebracht ist.

46) Anordnung nach Anspruch 45, dadurch gekennzeichnet, daß der Energiespeicher mittels einer am Wechselschieber angeordneten Zahnstange über ein im Zusatzteil angeordnetes Zahnrad aufladbar ist.

47) Anordnung nach Anspruch 45, dadurch gekennzeichnet, daß der Energiespeicher eine Zugfeder mit einem Ablaufhemmwerk umfaßt.

48) Anordnung nach Anspruch 2 und 18, dadurch gekennzeichnet, daß die Kupplung zwischen Magazin und Zusatzteil nur dann lösbar ist, wenn der Tonkopf in einer definierten Position bezüglich des Magazins steht.

49) Anordnung nach Anspruch 3, dadurch gekennzeichnet, daß bei Verwendung einer Sofortbild-Kamera ein Magnetbandabschnitt unmittelbar nach der Bildaufnahme auf den Bildträger während oder nach dessen Entwicklung oder während dessen Auswurf aus der Kamera aufgebracht wird.

50) Anordnung nach Anspruch 1, dadurch gekennzeichnet, daß die Anordnung eine Projektionsoptik für die im Sichtfenster des Magazins präsentierte Karte aufweist.

51) Anordnung nach einem oder mehreren der vorangehenden Ansprüche, gekennzeichnet durch eine Anzeigeeinrichtung für die jeweils noch zur Verfügung stehende bzw. bereits verbrauchte Speicherkapazität einer Karte.

52) Anordnung nach Anspruch 2 oder einem von Anspruch 2 abhängenden Anspruch, dadurch gekennzeichnet, daß der Tonkopf während der Wechselschieberbetätigung automatisch von der Tonspur abgehoben ist.

53) Anordnung nach Anspruch 1 oder 50, gekennzeichnet durch einen motorischen Antrieb für die Wechselschieberbewegung.

54) Anordnung nach Anspruch 2, gekennzeichnet durch umschaltbare Abtastgeschwindigkeiten des Tonkopfes.

55) Anordnung nach Anspruch 2, dadurch gekennzeichnet, daß das Magazin derart ausgebildet ist, daß bei einer Wechselschieberbetätigung die unterste Karte des Stapels nach oben befördert und als nächste im Sichtfenster präsentiert wird, und daß der Tonkopf

- 6 -

jeweils die Spur der untersten Karte abtastet, die abgetasteten Signale in einem Zwischenspeicher gespeichert und erst nach der nächsten Wechselschieberbetätigung abrufbar sind.

56) Anordnung nach Anspruch 3, gekennzeichnet durch eine magnetische Löschvorrichtung, die durch die Wechselschieberbewegung betätigbar ist.

57) Anordnung nach Anspruch 53, dadurch gekennzeichnet, daß die Toninformation ein Befehlssignal für den Wechselschieberantrieb nahe dem Ende der Tonspur umfaßt.

Fig.1

Fig.2

29/15

0139779

Fig.4

Fig.3

0139779

**Fig.5**

22

26

23

**Fig.6**

24 25 28 29 26 27

**Fig.7**

28 26 31 29 30

**Fig.8**

28 33 29 32

Fig.9

Fig.10

Fig.11

Fig.12

47

46

44

45

Fig.13

48

50

51

52

49

46

Fig.14

46

54

53

52

49

Fig.15

46

45

54

52

49

6/15

01'39779

Fig.16

## Fig.17

## Fig.18

Fig.22

Fig.19

Fig.20

Fig.21

Fig.23

0139779

Fig.24

Fig.25

Fig.26

Fig.27

Fig.28

Fig.29

Fig.30

0139779

## Fig.31

## Fig.32

Fig.33

118
119
134

Fig.34

136    135    136

128

Fig.35

123    137

132    131

Fig.36    138

138

124

0139779

0139779

# Fig.37

163

165

# Fig.38

163

163

164

**Europäisches Patentamt**

# EUROPÄISCHER RECHERCHENBERICHT

Nummer der Anmeldung

EP '83 11 0772

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | US-A-3 704 337 (INFORMATION TRANSFER CORP.)  * Figuren 1,3,4,7-9; Spalte 3, Zeilen 20-68; Spalte 5, Zeilen 24-31, 55-68; Spalte 6; Spalte 7, Zeilen 1-43; Spalte 12, Zeilen 34-41; Spalte 14, Zeilen 13-35 *  --- | 1-3,5, 8,21- 23,25, 26,28, 31,32, 37-43 | G 09 B 5/06 G 03 B 23/14 |
| Y | US-A-4 245 417 (LICINVEST AG)  * Figuren 1-18,21-26,32-48; Spalte 5, Zeilen 44-68; Spalte 6, Zeilen 1-8, 62-68; Spalte 7, Zeilen 1-12; Spalte 8, Zeilen 36-68; Spalte 9, Zeilen 1-11, 62-68; Spalte 10, Zeilen 1-11 *  --- | 1,27, 28,38, 55 | |
| A | US-A-3 598 927 (IBM CORP.)  * Figuren 1-5,9; Spalte 4, Zeilen 4-40; Spalte 5; Spalte 6, Zeilen 1-15, 68-74; Spalte 7, Zeilen 40-75; Spalte 8, Zeilen 1-20 *  ---                    -/- | 1-3,5, 8-12, 15,28, 39-43, 57 | **RECHERCHIERTE SACHGEBIETE (Int. Cl. 3)**  G 09 B G 06 K G 03 B |

Der vorliegende Recherchenbericht wurde für alle Patentansprüche erstellt.

| Recherchenort | Abschlußdatum der Recherche | Prüfer |
|---|---|---|
| DEN HAAG | 21-06-1984 | ALLEN E.F. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.³) |
|---|---|---|---|
| A | US-A-3 997 917 (SONY CORP.)<br><br>* Figuren 1-4; Spalte 2, Zeilen 45-68; Spalte 3, Zeilen 1-46; Spatle 4, Zeilen 1-42; Spalte 6, Zeilen 30-68; Spalte 7, Zeilen 1-17 *<br>--- | 1-3,5-7,10, 11,13, 39,44-47,50, 53 | |
| A | US-A-4 031 634 (CALIFONE INTERNATIONAL INC.)<br><br>* Figuren 1-3,4,7,14; Spalte 2, Zeilen 50-68; Spalte 3, Zeilen 1-25, 63-68; Spalte 4, Zeilen 1-27 *<br>--- | 1-3,5-7,10, 11,39-42,54 | |
| A | US-A-3 903 627 (HERZOG)<br><br>---     -/- | | |

**RECHERCHIERTE SACHGEBIETE (Int. Cl.³)**

Der vorliegende Recherchenbericht wurde für alle Patentansprüche erstellt.

| Recherchenort | Abschlußdatum der Recherche | Prüfer |
|---|---|---|
| DEN HAAG | 21-06-1984 | ALLEN E.F. |

## EINSCHLÄGIGE DOKUMENTE

Seite 3

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 883 238 (DIMITRACOPOULOS)<br><br>* Figuren 1-15; Spalte 4, Zeilen 33-43; Spalte 5, Zeilen 9-68; Spalte 6, Zeilen 1-15, 48-68; Spalte 7; Spalte 8; Spalte 9, Zeilen 1-4; Spalte 10, Zeilen 42-55 *<br><br>--- | 1-12, 15-18, 27,32, 39-43, 50-53, 57 | |
| A | US-A-4 270 853 (WEST ELECTRIC CO., LTD.)<br>* Figuren 5a,7-10; Spalte 9, Zeilen 7-68; Spalte 10, Zeilen 1-53 *<br><br>----- | 2-7,15 ,49 | |

RECHERCHIERTE SACHGEBIETE (Int. Cl. ³)

Der vorliegende Recherchenbericht wurde für alle Patentansprüche erstellt.

| Recherchenort | Abschlußdatum der Recherche | Prüfer |
|---|---|---|
| DEN HAAG | 21-06-1984 | ALLEN E.F. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82